# EUROPÄISCHE PATENTANMELDUNG

(11) **EP 4 439 020 A1**
(43) Veröffentlichungstag der Anmeldung: **02.10.2024**
(21) Anmeldenummer: 24161658.0
(22) Anmeldetag: 06.03.2024
(51) Int. Cl.: G01F 1/667, G01F 25/10, G01F 15/02, G01F 15/04

(54) **FLUIDDURCHFLUSSMESSGERÄT, ÜBERWACHUNGSSYSTEM MIT ZUMINDEST EINEM SOLCHEN FLUIDDURCHFLUSSMESSGERÄT UND VERFAHREN ZUM BETRIEB EINES FLUIDDURCHFLUSSMESSGERÄTS**

(30) Priorität: 16.03.2023 DE 102023106668
(71) Anmelder: SICK Engineering GmbH, 01458 Ottendorf-Okrilla (DE)
(72) Erfinder: Wenzel, Jörg, 01744 Dippoldiswalde (DE); Heinig, Daniel, 01109 Dresden (DE)
(74) Vertreter: Manitz Finsterwald Patent- und Rechtsanwaltspartnerschaft mbB

(57) **Zusammenfassung**

Ein Fluiddurchflussmessgerät (1) dient dazu, um den Durchfluss eines Fluids (3), insbesondere in Form von Gas, in einer Röhre (2) zu bestimmen, wobei das Fluiddurchflussmessgerät (1) dazu ausgebildet ist, um eine erste Messgröße (5a) und zumindest eine zweite Messgröße (5b) für das Fluid (3) und zumindest eine erste Diagnosekenngröße (6) zu erzeugen. Das Fluiddurchflussmessgerät (1) umfasst ein Diagnosesystem (7), welches dazu ausgebildet ist, um sowohl anhand der ersten Messgröße (5a) als auch anhand der zumindest einen zweiten Messgröße (5b) einen ersten Schwellwert (4a) für die zumindest eine erste Diagnosekenngröße (6) zu ermitteln und um ab dessen Erreichen eine erste Meldung an eine übergeordnete Leiteinrichtung (50) auszugeben.

## Beschreibung

Die Erfindung betrifft ein Fluiddurchflussmessgerät, ein Überwachungssystem mit zumindest einem solchen Fluiddurchflussmessgerät und ein Verfahren zum Betrieb eines Fluiddurchflussmessgeräts.

Fluiddurchflussmessgeräte werden heutzutage für die Durchflussmessung von Fluiden in Röhren oder Pipelines verwendet. Die Durchflussmessung dient beispielsweise zum Abrechnen der übertragenen Fluidmenge.

Unter einem Fluid werden sowohl Flüssigkeiten als auch Gase verstanden. Die Erfindung betrifft dabei insbesondere Fluiddurchflussmessgeräte für Gase. Bei einem solchen Gas kann es sich beispielsweise um Erdgas handeln, welches in einer Erdgasleitung bzw. Erdgasröhre übertragen wird. Verändert sich die Gaszusammensetzung, beispielsweise weil der Wasserstoffanteil im Erdgas schwankt, so kann dies Auswirkungen auf die Diagnosefähigkeit des Fluiddurchflussmessgeräts haben.

Es ist daher wünschenswert ein Fluiddurchflussmessgerät zu schaffen, welches eine Aussage darüber treffen kann, ob es fehlerfrei funktioniert oder ob eine Wartung notwendig ist.

Die Aufgabe wird durch das Fluiddurchflussmessgerät gemäß dem Anspruch 1, sowie durch ein Überwachungssystem mit einem solchen Fluiddurchflussmessgerät gemäß dem Anspruch 14 und durch ein Verfahren zum Betrieb eines solchen Fluiddurchflussmessgeräts gemäß dem Anspruch 15 gelöst. In den Ansprüchen 2 bis 13 sind vorteilhafte Weiterbildungen des Fluiddurchflussmessgeräts angegeben.

Das erfindungsgemäße Fluiddurchflussmessgerät dient dazu, den Durchfluss eines Fluids, insbesondere in Form von (Erd-)Gas, in einer Röhre zu bestimmen, insbesondere zu berechnen. Unter einem Durchfluss wird verstanden, wie viel Fluid in vorgegebener Zeit durch die Röhre fließt. Das Fluiddurchflussmessgerät ist dazu ausgebildet, um eine erste Messgröße und zumindest eine zweite Messgröße für das Fluid und zumindest eine erste Diagnosekenngröße zu erzeugen. Das Fluiddurchflussmessgerät umfasst weiterhin ein Diagnosesystem, welches dazu ausgebildet ist, um sowohl anhand der ersten Messgröße als auch anhand der zumindest einen zweiten Messgröße einen ersten Schwellwert für die zumindest eine erste Diagnosekenngröße zu ermitteln.

Das Diagnosesystem ist weiterhin dazu ausgebildet, um ab Erreichen des ersten Schwellwerts eine erste Meldung an eine übergeordnete Leiteinrichtung auszugeben. Der Wortlaut "Erreichen" umfasst, je nach Art des Schwellwerts, auch ein "Überschreiten" oder ein "Unterschreiten". Es ist besonders vorteilhaft, dass zumindest zwei (bzgl. ihres Typs unterschiedliche) Messgrößen für das Fluid erzeugt werden und dass weiterhin eine erste Diagnosekenngröße erzeugt wird.

Es ist hierbei besonders vorteilhaft, dass anhand der zumindest beiden Messgrö-ßen der Schwellwert für die zumindest eine erste Diagnosekenngröße ermittelt wird. Dadurch kann der Schwellwert im Betrieb viel genauer anhand aktueller Messgrößen verändert und an das aktuell durch die Röhre strömende Fluid angepasst werden. Je nach Art der Messgröße kann sich diese beispielsweise bei einer Änderung der Gaszusammensetzung des Fluids ebenfalls ändern. In diesem Fall wird der Schwellwert angepasst und das Fluiddurchflussmessgerät gibt die erste Meldung bei einem anderen Wert für die zumindest eine Diagnosekenngröße aus.

Es kann daher sein, dass bei sich ändernder erster und/oder zweiter Messgröße die Meldung an die übergeordnete Leiteinrichtung ausgegeben wird, die bei den ursprünglichen Werten für die erste und/oder zweite Messgröße nicht ausgegeben worden wäre. Umgekehrt kann es natürlich auch sein, dass bei sich ändernder erster und/oder zweiter Messgröße die Meldung an die übergeordnete Leiteinrichtung nicht ausgegeben wird, die bei den ursprünglichen Werten für die erste und/oder zweite Messgröße ausgegeben worden wäre. Es ist insbesondere vorteilhaft, dass der Schwellwert nicht lediglich aufgrund einer einzigen Messgröße des Fluids berechnet wird, sondern zwei verschiedene Messgrößen für die Berechnung des zumindest einen ersten Schwellwerts herangezogen werden.

Durch die fortlaufende Anpassung des ersten Schwellwerts für die zumindest eine erste Diagnosekenngröße im Betrieb des Fluiddurchflussmessgeräts kann zu verschiedenen Betriebszuständen (z.B. unterschiedliche Fluidzusammensetzungen) stets eine Aussage darüber getroffen werden, ob das Fluiddurchflussmessgerät fehlerfrei funktioniert, also insbesondere ob die Messfähigkeit ausreichend ist und/oder ob es den Durchfluss mit einer gewünschten Genauigkeit ermittelt, oder ob eine Wartung notwendig ist. So wird der zumindest eine erste Schwellwert beispielsweise dann angepasst, wenn das Erdgas mehr oder weniger Wasserstoff enthält, oder wenn reiner Wasserstoff gemessen wird, oder wenn CO₂ gemessen wird. So kann mit der hier vorliegenden Erfindung u.a. auf eine sich im Betrieb ändernde Fluidzusammensetzung reagiert und die Diagnosefähigkeit des Gerätes sichergestellt werden.

In einer vorteilhaften Weiterbildung des Fluiddurchflussmessgeräts ist das Fluiddurchflussmessgerät dazu ausgebildet, um eine Vielzahl von ersten Messgrößen zu Mitteln, um dieses Ergebnis für die Berechnung des ersten Schwellwerts zu verwenden. Ergänzend oder alternativ ist das Fluiddurchflussmessgerät ebenfalls dazu ausgebildet, um eine Vielzahl von zweiten Messgrößen zu Mitteln, um dieses Ergebnis für die Berechnung des ersten Schwellwerts zu verwenden.

In einer vorteilhaften Weiterbildung des Fluiddurchflussmessgeräts ist das Fluiddurchflussmessgerät dazu ausgebildet, um fortlaufend die erste Diagnosekenngröße neu zu erzeugen und gegenüber dem ersten Schwellwert zu vergleichen. Vorzugsweise wird der erste Schwellwert, der anhand des jeweils aktuellen Wertes für die erste und zumindest eine zweite Messgröße neu berechnet wird, ebenfalls fortlaufend aktualisiert.

In einer vorteilhaften Weiterbildung ist das Diagnosesystem dazu ausgebildet, um sowohl anhand der ersten Messgröße als auch anhand der zumindest einen zweiten Messgröße einen zweiten Schwellwert für die zumindest eine erste Diagnosekenngröße zu ermitteln und um ab dessen Erreichen eine zweite Meldung an die übergeordnete Leiteinrichtung auszugeben, wobei die erste Meldung eine Warnmeldung oder eine Störungsmeldung ist und wobei die zweite Meldung eine Störungsmeldung oder eine Warnmeldung ist. Die erste und die zweite Meldung sind von einem unterschiedlichen Typ (Warnmeldung bzw. Störungsmeldung). Der Wortlaut "Erreichen" umfasst, je nach Art des Schwellwerts, auch ein "Überschreiten" oder ein "Unterschreiten". Der erste und der zweite Schwellwert sind unterschiedlich hoch. Es ist besonders vorteilhaft, dass neben einem ersten Schwellwert auch ein zweiter Schwellwert ermittelt wird. Dadurch können Bereiche für die erste Diagnosekenngröße eingestellt werden, in denen keine oder unterschiedliche Meldungen ausgegeben werden. So kann eine Warnmeldung auf ein künftiges Ereignis hindeuten und den Betreiber des Fluiddurchflussmessgeräts veranlassen das entsprechende Fluiddurchflussmessgerät bei nächster Gelegenheit zu überprüfen. Eine Störungsmeldung dagegen signalisiert dem Betreiber des Fluiddurchflussmessgeräts, dass keine validen Messwerte für den Durchfluss mehr erzeugt werden. Vorzugsweise ist das Diagnosesystem dazu ausgebildet, um die Warnmeldung und/oder die Störungsmeldung in ein Fehlerregister in dem Fluiddurchflussmessgerät und/oder in ein Fehlerregister einer Rechnereinheit der übergeordneten Leiteinrichtung zu schreiben. Weiter vorzugsweise ist das Diagnosesystem dazu ausgebildet, um neben der Warnmeldung und/oder der Störungsmeldung noch ein Zeitstempel mit in das Fehlerregister zu schreiben. Ergänzend oder alternativ ist das Diagnosesystem dazu ausgebildet, um bei Auftreten der Warnmeldung und/oder der Störungsmeldung den Durchflusswert des Fluiddurchflussmessgeräts in das Fehlerregister zu schreiben.

In einer vorteilhaften Weiterbildung ist die zumindest eine erste Messgröße ein physikalischer Messwert des Fluids oder eine aus einem physikalischen Messwert abgeleitete Größe. Ergänzend oder alternativ ist die zumindest eine zweite Messgröße ein physikalischer Messwert des Fluids oder eine aus einem physikalischen Messwert abgeleitete Größe. Die erste und die zweite Messgröße sind von unterschiedlichem Typ.

In einer vorteilhaften Weiterbildung ist die erste Messgröße ausgewählt aus einer Fluiddurchflussgeschwindigkeit, einer Schallgeschwindigkeit in dem Fluid oder einer auf Druck und Temperatur normierten Schallgeschwindigkeit in dem Fluid. Bei der Fluiddurchflussgeschwindigkeit und der Schallgeschwindigkeit in dem Fluid handelt es sich um einen physikalischen Messwert. Bei der auf Druck und Temperatur normierten Schallgeschwindigkeit in dem Fluid handelt es sich um eine aus einem physikalischen Messwert abgeleitete Größe. Ergänzend oder alternativ ist die zweite Messgröße ausgewählt aus einer Fluiddurchflussgeschwindigkeit, einer Schallgeschwindigkeit in dem Fluid oder einer auf Druck und Temperatur normierten Schallgeschwindigkeit in dem Fluid. Bei der Fluiddurchflussgeschwindigkeit und der Schallgeschwindigkeit in dem Fluid handelt es sich um einen physikalischen Messwert. Bei der auf Druck und Temperatur normierten Schallgeschwindigkeit in dem Fluid handelt es sich um eine aus einem physikalischen Messwert abgeleitete Größe. Die erste und die zweite Messgröße umfassen dabei unterschiedliche Fluideigenschaften. So kann die erste Messgröße die Fluiddurchflussgeschwindigkeit und die zweite Messgröße die Schallgeschwindigkeit in dem Fluid umfassen. Selbstverständlich kann die erste Messgröße und/oder die zweite Messgröße noch aus weiteren Fluideigenschaften ausgewählt sein.

In einer vorteilhaften Weiterbildung beschreibt die erste Diagnosekenngröße eine Messgenauigkeit des Fluiddurchflussmessgeräts oder lässt Rückschlüsse auf eine Messgenauigkeit zu. Beispielsweise kann die erste Diagnosekenngröße aus der ersten Messgröße und/oder der zweiten Messgröße ermittelt, also abgeleitet, insbesondere berechnet werden.

Einer vorteilhaften Weiterbildung ist die zumindest eine erste Diagnosekenngröße ein Signal-zu-Rausabstand (SNR) oder eine Turbulenz des Fluids. Der erste und optional zweite Schwellwert geben einen Wert für den Signal-zu-Rauschabstand an, ab dessen Erreichen oder in diesem Fall Unterschreiten die erste Meldung und optional die zweite Meldung erzeugt und an die übergeordnete Leiteinrichtung ausgegeben wird. Ein solcher Signal-zu-Rauschabstand beschreibt beispielsweise die Signalqualität und damit die Genauigkeit, mit welcher das Fluiddurchflussmessgerät aktuell betreibbar ist. Ergänzend kann der erste und optional zweite Schwellwert einen Wert für die Turbulenz des Fluids angeben, ab dessen Erreichen oder in diesem Fall Überschreiten die erste Meldung und optional die zweite Meldung erzeugt und an die übergeordnete Leiteinrichtung ausgegeben wird. Ein solcher Wert für die Turbulenz beschreibt ebenfalls die Genauigkeit, mit welcher das Fluiddurchflussmessgerät aktuell betreibbar ist.

Es ist hier besonders vorteilhaft, dass die erste Messgröße und die zweite Messgröße eine Fluideigenschaft beschreiben und in Abhängigkeit der Fluideigenschaft der erste und optional zweite Schwellwert für die Diagnosekenngröße, beispielsweise in Form des Signal-zu-Rauschabstands oder der Turbulenz, ermittelt wird. So wird der erste und optional zweite Schwellwert in Abhängigkeit von zwei Messgrößen eingestellt. Ändert sich beispielsweise die Fluiddurchflussgeschwindigkeit (erste Messgröße) und die Schallgeschwindigkeit in dem Fluid (zweite Messgröße) so können für unterschiedliche Werte für die Fluiddurchflussgeschwindigkeit und die Schallgeschwindigkeit in dem Fluid verschiedene erste und optional zweite Schwellwerte ermittelt bzw. festgelegt werden.

In einer vorteilhaften Weiterbildung umfasst das Diagnosesystem eine Speichereinheit, in welcher eine Look-Up-Tabelle hinterlegt ist. Das Diagnosesystem ist dazu ausgebildet, um in Abhängigkeit der zumindest einen ersten und zweiten Messgröße den ersten Schwellwert für die zumindest eine erste Diagnosekenngröße aus der Look-Up-Tabelle auszulesen. Im Betrieb des Fluiddurchflussmessgeräts kann fortlaufend anhand der ersten und zweiten Messgröße ein neuer Wert für den ersten Schwellwert ausgelesen werden. Die Speichereinheit kann beispielsweise direkt in dem Fluiddurchflussmessgerät integriert sein. Die Speichereinheit kann auch entfernt, beispielsweise in der Leiteinrichtung, angeordnet sein. Ergänzend ist es auch denkbar, dass das Diagnosesystem dazu ausgebildet ist, um in Abhängigkeit der zumindest einen ersten und zweiten Messgröße den zweiten Schwellwert für die zumindest eine erste Diagnosekenngröße aus der Look-Up-Tabelle auszulesen. Dies kann ebenfalls fortlaufend in Abhängigkeit der ersten und zweiten Messgröße erfolgen. Es ist auch denkbar, dass der zweite Schwellwert aus dem ersten ausgelesenen Schwellwert ermittelt wird. Beispielsweise kann das Diagnosesystem dazu ausgebildet sein, um den zweiten Schwellwert um einen bestimmten Wert zu dem ersten ausgelesenen Schwellwert zu beabstanden, d.h. der zweite Schwellwert kann z.B. um den bestimmten Wert größer oder kleiner sein, als der erste Schwellwert. In diesem Fall muss nur ein Schwellwert, insbesondere der erste Schwellwert, aus der Look-Up-Tabelle ausgelesen werden.

In einer vorteilhaften Weiterbildung umfasst das Diagnosesystem ein, insbesondere trainiertes, KI-Modul. Das KI-Modul ist dazu ausgebildet, um in Abhängigkeit der zumindest einen ersten und zweiten Messgröße den ersten Schwellwert für die zumindest eine erste Diagnosekenngröße zu ermitteln. Vorzugsweise umfasst das KI-Modul zumindest zwei Eingangsknoten, mehrere Zwischenknoten und zumindest einen Ausgangsknoten. Den beiden Eingangsknoten werden die erste und die zweite Messgröße zugeführt. An dem zumindest einen Ausgangsknoten wird der erste Schwellwert ausgegeben. Das KI-Modul kann über Trainingsdaten trainiert sein. Diese Trainingsdaten umfassen eine Vielzahl von Datensätzen, wobei jeder Datensatz mindestens einen Wert für die erste Messgröße, einen Wert für die zweite Messgröße und einen Wert für den ersten Schwellwert umfasst. Die Trainingsdaten können dabei mehr als 100, 1000, 10000 oder mehr als 100000 Datensätze umfassen. Selbstverständlich kann das KI-Modul auch dazu ausgebildet sein, um in Abhängigkeit der zumindest einen ersten und zweiten Messgröße den zweiten Schwellwert für die zumindest eine erste Diagnosekenngröße zu ermitteln. Vorzugsweise umfasst das KI-Modul in diesem Fall ebenfalls zumindest zwei Eingangsknoten, mehrere Zwischenknoten und zumindest einen Ausgangsknoten. Den beiden Eingangsknoten werden die erste und die zweite Messgröße zugeführt. An dem zumindest einen Ausgangsknoten wird der zweite Schwellwert ausgegeben. Das KI-Modul kann über Trainingsdaten trainiert sein. Diese Trainingsdaten umfassen eine Vielzahl von Datensätzen, wobei jeder Datensatz einen Wert für die erste Messgröße, einen Wert für die zweite Messgröße und einen Wert für den zweiten Schwellwert umfasst. Die Trainingsdaten können dabei mehr als 100, 1000, 10000 oder mehr als 100000 Datensätze umfassen. Alternativ wäre es denkbar, dass das KI-Modul zumindest zwei Eingangsknoten, mehrere Zwischenknoten und zwei Ausgangsknoten umfasst. Den beiden Eingangsknoten werden die erste und die zweite Messgröße zugeführt. An dem ersten Ausgangsknoten wird der erste Schwellwert ausgegeben. An dem zweiten Ausgangsknoten wird der zweite Schwellwert ausgegeben. Das KI-Modul kann über Trainingsdaten trainiert sein. Diese Trainingsdaten umfassen eine Vielzahl von Datensätzen, wobei jeder Datensatz einen Wert für die erste Messgröße, einen Wert für die zweite Messgröße, einen Wert für den ersten Schwellwert und einen Wert für den zweiten Schwellwert umfasst. Die Trainingsdaten können dabei mehr als 100, 1000, 10000 oder mehr als 100000 Datensätze umfassen.

In einer vorteilhaften Weiterbildung ist das Fluiddurchflussmessgerät dazu ausgebildet, um zumindest eine zweite Diagnosekenngröße, die von der ersten Diagnosekenngröße verschieden ist, zu erzeugen. Das Diagnosesystem ist dazu ausgebildet, um sowohl anhand der ersten Messgröße als auch anhand der zumindest einen zweiten Messgröße einen ersten Schwellwert für die zumindest eine zweite Diagnosekenngröße zu ermitteln, um ab dessen Erreichen eine erste Meldung an die übergeordnete Leiteinrichtung auszugeben. So kann es sich bei der zweiten Diagnosekenngröße um ein Signal-zu-Rauschabstand oder um eine Turbulenz des Fluids handeln. Besonders vorteilhaft ist, dass der erste Schwellwert ebenfalls mit der ersten und zweiten Messgröße ermittelt werden kann. Selbstverständlich könnten auch andere Messgrößen hierfür verwendet werden. Der Wortlaut "Erreichen" umfasst, je nach Art des Schwellwerts, auch ein "Überschreiten" oder ein "Unterschreiten". Bei der ersten Meldung handelt es sich vorzugsweise um eine Warnmeldung. Es könnte sich auch um eine Störungsmeldung handeln. Grundsätzlich ist es denkbar, dass das Diagnosesystem weiter dazu ausgebildet ist, um sowohl anhand der ersten Messgröße als auch anhand der zumindest einen zweiten Messgröße einen zweiten Schwellwert für die zumindest eine zweite Diagnosekenngröße zu ermitteln, um ab dessen Erreichen eine erste Meldung an die übergeordnete Leiteinrichtung auszugeben. Besonders vorteilhaft ist, dass der zweite Schwellwert ebenfalls mit der ersten und zweiten Messgröße ermittelt werden kann. Selbstverständlich könnten auch weitere Messgrößen hierfür verwendet werden. Der Wortlaut "Erreichen" umfasst, je nach Art des Schwellwerts, auch ein "Überschreiten" oder ein "Unterschreiten". Bei der zweiten Meldung handelt es sich vorzugsweise um eine Störungsmeldung. Durch Einsatz einer zweiten Diagnosekenngröße ist es möglich, dass das Fluiddurchflussmessgerät noch genauer betrieben werden kann. Weiterhin kann das Fluiddurchflussmessgerät beispielsweise dazu ausgebildet sein, um die zweite Diagnosekenngröße fortlaufend neu zu berechnen, also zu aktualisieren. Dadurch kann es zu einer Ausgabe der ersten bzw. zweiten Meldung kommen, selbst wenn sich der erste bzw. zweite Schwellwert nicht verändert haben.

In einer vorteilhaften Weiterbildung umfasst das Fluiddurchflussmessgerät eine Messeinrichtung mit einer ersten und einer zweiten Sende- und Empfangseinheit. Die erste Sende- und Empfangseinheit ist dazu ausgebildet, um ein erstes Ultraschallsignal zu erzeugen und vorzugsweise direkt in Richtung der zweiten Sende- und Empfangseinheit auszusenden und um ein zweites Ultraschallsignal zu empfangen. Die zweite Sende- und Empfangseinheit ist dazu ausgebildet, um das zweite Ultraschallsignal zu erzeugen und auszusenden und vorzugsweise direkt in Richtung der ersten Sende- und Empfangseinheit auszusenden und um das erste Ultraschallsignal zu empfangen. Die erste und die zweite Sende- und Empfangseinheit sind sowohl in Umfangsrichtung der Röhre als auch in Axialrichtung der Röhre versetzt an der Röhre anbringbar. Die Messeinrichtung ist dazu ausgebildet, um die erste und die zweite Messgröße, insbesondere mittels der ersten und zweiten Sende- und Empfangseinheit, zu ermitteln. Beispielsweise ist es über die erste und zweite Sende- und Empfangseinheit möglich die Fluiddurchflussgeschwindigkeit und die Schallgeschwindigkeit in dem Fluid zu ermitteln. Dies gelingt dadurch, weil die erste und die zweite Sende- und Empfangseinheit in Axialrichtung versetzt angeordnet sind, wodurch sich bei einem Fluid, welches durch die Röhre strömt, die Signallaufzeit für das erste Ultraschallsignal von der Signallaufzeit für das zweite Ultraschallsignal unterscheidet. Dieser Unterschied in der Signallaufzeit ist insbesondere abhängig von der Fluiddurchflussgeschwindigkeit, der Fluidtemperatur, des Fluiddrucks und der Fluidzusammensetzung. Das erste und das zweite Ultraschallsignal werden durch das Innere der Röhre gesendet.

In einer vorteilhaften Weiterbildung umfasst die Messeinrichtung zumindest einen Drucksensor, der dazu ausgebildet ist, um den Druck des Fluids innerhalb der Röhre zu messen. Ergänzend oder alternativ umfasst die Messeinrichtung zumindest einen Temperatursensor, der dazu ausgebildet ist, um die Temperatur des Fluids innerhalb der Röhre zu messen. In Abhängigkeit dieser Parameter ist es insbesondere möglich, die Fluiddurchflussgeschwindigkeit, die Schallgeschwindigkeit in dem Fluid oder eine auf Druck und Temperatur normierte Schallgeschwindigkeit in dem Fluid zu ermitteln. Die Werte von Druck und Temperatur können alternativ auch von extern in das Gerät geschrieben werden, wenn an der Messeinrichtung selbst keine Sensoren installiert sind.

In einer vorteilhaften Weiterbildung umfasst die Messeinrichtung zumindest einen A/D-Wandler. Diese zumindest eine A/D-Wandler ist dazu ausgebildet, um das erste Ultraschallsignal, das zweite Ultraschallsignal, das Drucksignal und/oder das Temperatursignal zu ermitteln. Der Signal-zu-Rauschabstand kann die Signalqualität des jeweiligen Signals hin zum Noise Floor beschreiben. Der zumindest eine A/D-Wandler kann beispielsweise mehrere Kanäle umfassen. Es können auch mehrere A/D-Wandler mit beispielsweise je einem Kanal eingesetzt werden.

Das erfindungsgemäße Überwachungssystem umfasst zumindest ein zuvor beschriebenes Fluiddurchflussmessgerät. Weiterhin umfasst das Überwachungssystem eine Leiteinrichtung. Das zumindest eine Fluiddurchflussmessgerät ist an der zumindest einen Röhre anbringbar oder in die Röhre einbaubar. Das zumindest eine Fluiddurchflussmessgerät ist dazu ausgebildet, um zu bestimmen wie viel Fluid in einer bestimmten Zeit durch die Röhre strömt. Das zumindest eine Fluiddurchflussmessgerät ist weiter dazu ausgebildet, um die erste Meldung an die Leiteinrichtung zu übertragen, wobei die Leiteinrichtung dazu ausgebildet ist, um die erste Meldung oder eine daraus abgeleitete Meldung visuell und/oder akustisch darzustellen. Es ist besonders vorteilhaft, dass die Leiteinrichtung die erste Meldung für das Betriebspersonal visuell und/oder akustisch darstellt, weil dadurch sehr schnell auf den aktuellen Status des Fluiddurchflussmessgeräts geschlossen werden kann. Es ist auch denkbar, dass eine Vielzahl von Fluiddurchflussmessgeräten, die an derselben Röhre und/oder an verschiedenen Röhren anbringbar sind, mit der Leiteinrichtung verbunden sind.

Das erfindungsgemäße Verfahren dient zum Betrieb eines, insbesondere zuvor beschriebenen, Fluiddurchflussmessgeräts. Das Fluiddurchflussmessgerät ist dazu ausgebildet, um den Durchfluss eines Fluids, insbesondere in Form von Gas, in einer Röhre zu bestimmen. In einem ersten Verfahrensschritt wird eine erste Messgröße und zumindest eine zweite Messgröße für das Fluid erzeugt. Weiterhin wird zumindest eine erste Diagnosekenngröße erzeugt. In einem zweiten Verfahrensschritt wird ein erster Schwellwert für die zumindest eine erste Diagnosekenngröße anhand der ersten Messgröße und anhand der zumindest einen zweiten Messgröße ermittelt. In einem dritten Verfahrensschritt wird eine erste Meldung an eine übergeordnete Leiteinrichtung ausgegeben, wenn der erste Schwellwert für die insbesondere fortlaufend aktualisierte Diagnosekenngröße erreicht ist.

Nachfolgend wird die Erfindung rein beispielhaft unter Bezugnahme auf die Zeichnungen beschrieben. Es zeigen:
- Figuren 1, 2:: verschiedene Ausführungsbeispiele eines Überwachungssystems mit einem Fluiddurchflussmessgerät und einer Leiteinrichtung;
- Figur 3:: ein Ausführungsbeispiel, welches erläutert, wie ein erster und ein zweiter Schwellwert für eine erste Diagnosekenngröße in Abhängigkeit einer ersten Messgröße und einer zweiten Messgröße ermittelt wird; und
- Figur 4:: ein Verfahren zum Betrieb eines Fluiddurchflussmessgeräts.

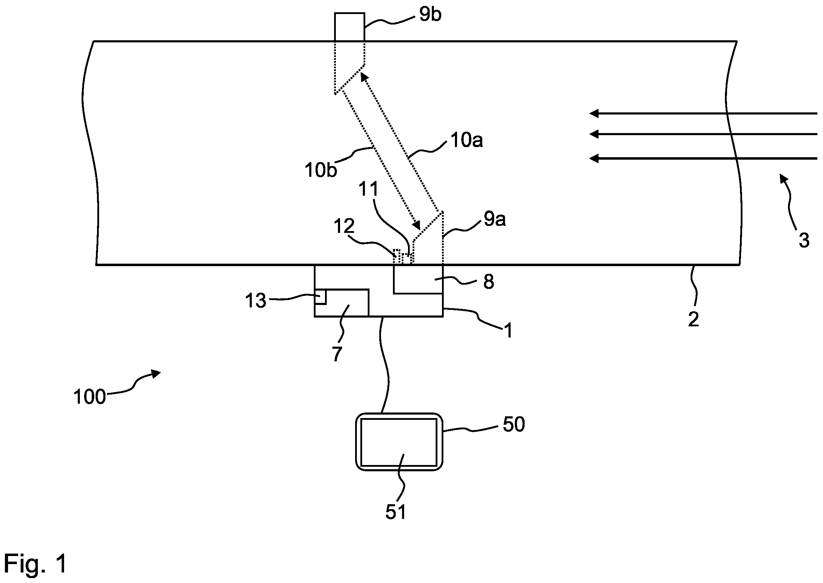

Figur 1 zeigt ein Ausführungsbeispiel eines Überwachungssystems 100 mit einem Fluiddurchflussmessgerät 1 und einer Leiteinrichtung 50. Das Fluiddurchflussmessgerät 1 ist an einer Röhre 2 angebracht, durch welches ein Fluid 3 strömt. Selbstverständlich kann das Überwachungssystem 100 mehrere Fluiddurchflussmessgeräte 1 umfassen, die an verschiedenen Stellen derselben Röhre 2 oder an verschiedenen Röhren 2 angebracht sind. Das Fluiddurchflussmessgerät 1 ist dazu ausgebildet, um zu bestimmen wie viel Fluid 3 in einer bestimmten Zeit durch die Röhre 2 strömt. Bei dem Fluid 3 handelt es sich insbesondere um (Erd-) Gas. Bei dem Fluid 3 kann es sich auch um Wasserstoff oder ein Gemisch aus Erdgas und Wasserstoff handeln.

Das Fluiddurchflussmessgerät 1 ist dazu ausgebildet, um eine erste Meldung zu erzeugen und an die Leiteinrichtung 50 zu übertragen. Die erste Meldung wird insbesondere dann erzeugt und an die Leiteinrichtung 50 übertragen, wenn zum Beispiel Diagnosewerte, wie die Genauigkeit, mit welcher das Fluiddurchflussmessgerät 1 den Durchfluss des Fluids 3 durch die Röhre 2 misst, nachlässt, insbesondere unterhalb eines ersten Schwellwerts 4a fällt.

Die Leiteinrichtung 50 umfasst eine Ausgabeeinheit 51, insbesondere in Form eines Bildschirms. Auf dieser Ausgabeeinheit 51 kann die zumindest eine erste Meldung oder eine daraus abgeleitete Meldung visuell (und/oder akustisch) angezeigt werden. Ergänzend oder alternativ dazu kann die erste Meldung bzw. eine daraus abgeleitete Meldung über digitale Schnittstellen an eine angeschlossene Leiteinrichtung übertragen werden. Die Ausgabeeinheit 51 kann auch ein Webserver sein, der Daten bereithält, die von einem Computer, Tablett oder Smartphone aus aufgerufen werden können. An die Leiteinrichtung 50 kann ein Fluiddurchflussmessgerät 1 oder mehrere Fluiddurchflussmessgeräte 1 angeschlossen werden.

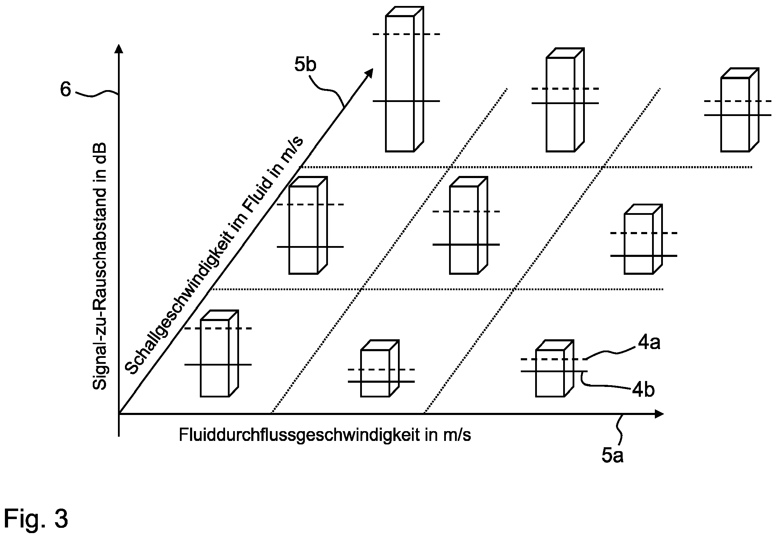

Das Fluiddurchflussmessgerät 1 ist dazu ausgebildet, um eine erste Messgröße 5a, eine zweite Messgröße 5b und zumindest eine erste Diagnosekenngröße 6 (siehe Figur 3) zu erzeugen. Die erste und/oder zweite Messgröße 5a, 5b ist vorzugsweise ein physikalischer Messwert, wie beispielsweise eine Fluiddurchflussgeschwindigkeit oder eine Schallgeschwindigkeit in dem Fluid 3 oder eine aus einem physikalischen Messwert abgeleitete Größe, wie beispielsweise eine auf Druck und Temperatur normierte Schallgeschwindigkeit in dem Fluid 3. Die zumindest eine erste Diagnosekenngröße 6 kann beispielsweise ein Signal-zu-Rauschabstand oder eine Turbulenz des Fluids 3 sein. Die zumindest eine erste Diagnosekenngröße 6 lässt daher Rückschlüsse auf eine Messgenauigkeit des Fluiddurchflussmessgeräts 1 zu oder beschreibt eine solche Messgenauigkeit.

Das Fluiddurchflussmessgerät 1 umfasst weiterhin ein Diagnosesystem 7, welches dazu ausgebildet ist, um sowohl anhand der ersten Messgröße 5a als auch anhand der zumindest einen zweiten Messgröße 5b einen ersten Schwellwert 4a für die zumindest eine erste Diagnosekenngröße 6 zu ermitteln und um ab dessen erreichen eine erste Meldung an die übergeordnete Leiteinrichtung 50 auszugeben. Bei der ersten Meldung handelt es sich bevorzugt um eine Warnmeldung. Es kann sich allerdings auch um eine Störungsmeldung handeln. Das Diagnosesystem 7 ist bevorzugt außerdem dazu ausgebildet, um anhand der ersten Messgröße 5a und der zweiten Messgröße 5b einen zweiten Schwellwert 4b (Figur 3) für die zumindest eine erste Diagnosekenngröße 6 zu ermitteln und um ab dessen erreichen eine zweite Meldung an die übergeordnete Leiteinrichtung 50 auszugeben. Bei der zweiten Meldung handelt es sich um eine Warnmeldung.

Das Fluiddurchflussmessgerät 1 umfasst weiterhin eine Messeinrichtung 8, die dazu ausgebildet ist, um die erste und die zumindest eine zweite Messgröße 5a, 5b zu erfassen. Der Signal-zu-Rauschabstand kann sich dabei auf die erste und/oder zweite Messgröße 5a, 5b beziehen.

Die Messeinrichtung 8 umfasst eine erste Sende- und Empfangseinheit 9a und eine zweite Sende- und Empfangseinheit 9b. Die erste Sende- und Empfangseinheit 9a ist dazu ausgebildet, um ein erstes Ultraschallsignal 10a zu erzeugen und auszusenden und um ein zweites Ultraschallsignal 10b zu empfangen. Die zweite Sende- und Empfangseinheit 9b ist dazu ausgebildet, um das zweite Ultraschallsignal 10b zu erzeugen und auszusenden und um das erste Ultraschallsignal 10a zu empfangen. Die erste und die zweite Sende- und Empfangseinheit 9a, 9b sind dabei sowohl in Umfangsrichtung als auch in Axialrichtung versetzt an der Röhre 2 angeordnet. Die Messeinrichtung 8 ist dazu ausgebildet, um beispielsweise die erste und die zweite Messgröße 5a, 5b über die erste und zweite Sende- und Empfangseinheit 9a, 9b zu ermitteln. Die erste und zweite Sende- und Empfangseinheit 9a, 9b sind natürlich dazu ausgebildet, um das erste und zweite Ultraschallsignal 10a, 10b durch das Fluid 3 hindurch auszusenden.

Die erste Sende- und Empfangseinheit 9a ist dazu ausgebildet, um das erste Ultraschallsignal 10a durch das Innere der Röhre 2 zur zweiten Sende- und Empfangseinheit 9b auszusenden, wobei die zweite Sende- und Empfangseinheit 9b dazu ausgebildet ist, um das erste Ultraschallsignal 10a zu empfangen und um das zweite Ultraschallsignal 10b durch das Innere der Röhre 2 zur ersten Sende- und Empfangseinheit 9a auszusenden. Die erste Sende- und Empfangseinheit 9a ist wiederum dazu ausgebildet, um das zweite Ultraschallsignal 10b zu empfangen. Insbesondere sind die erste und zweite Sende- und Empfangseinheit 9a ,9b derart zueinander angeordnet, dass innerhalb der Röhre 2 ein Sichtkontakt zwischen der ersten und zweiten Sende- und Empfangseinheit 9a, 9b vorliegt.

Die erste und/oder zweite Sende- und Empfangseinheit 9a ,9b können zumindest teilweise im Gehäuse des Fluiddurchflussmessgeräts 1 angeordnet sein. Die erste und/oder zweite Sende- und Empfangseinheit 9a, 9b können auch beabstandet zu dem Gehäuse des Fluiddurchflussmessgeräts 1 angeordnet und über eine entsprechende Datenverbindung (analog und/oder digital) mit dem Fluiddurchflussmessgerät 1 verbunden sein. Selbiges kann auch für den Drucksensor 11 und/oder den Temperatursensor 12 gelten.

In Figur 1 ist das Diagnosesystem 7 innerhalb des Gehäuses des Fluiddurchflussmessgeräts 1 angeordnet.

Vorzugsweise umfasst die Messeinrichtung 8 noch einen Drucksensor 11, der dazu ausgebildet ist, um den Druck des Fluids 3 innerhalb der Röhre 2 zu messen. Ergänzend oder alternativ umfasst die Messeinrichtung 8 noch zumindest einen Temperatursensor 12, der dazu ausgebildet ist, um die Temperatur des Fluids 3 innerhalb der Röhre 2 zu messen.

Weiter vorzugsweise umfasst das Diagnosesystem 7 noch eine Speichereinheit 13. In der Speichereinheit 13 ist eine Look-Up-Tabelle hinterlegt. Das Diagnosesystem 7 ist dazu ausgebildet, um in Abhängigkeit der zumindest einen ersten und zweiten Messgröße 5a, 5b den ersten Schwellwert 4a für die zumindest eine erste Diagnosekenngröße 6 aus der Look-Up-Tabelle auszulesen.

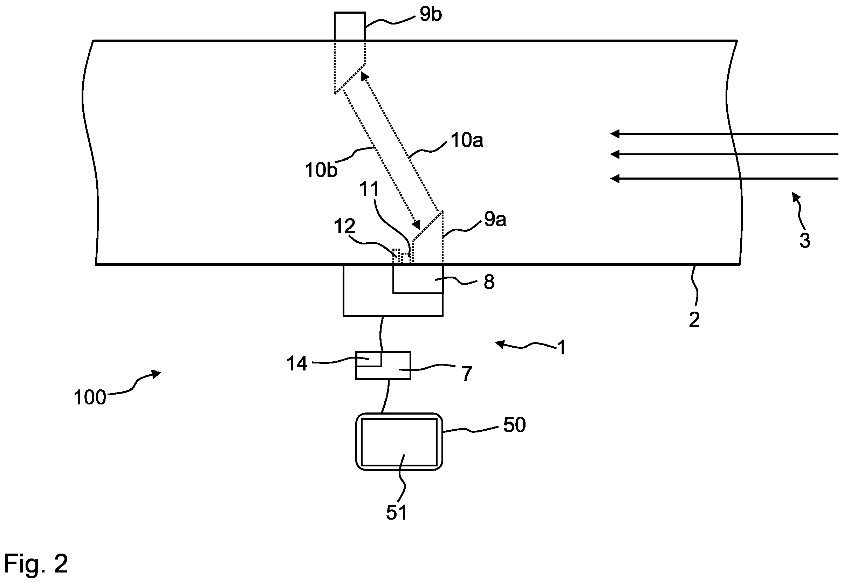

In Figur 2 ist eine weitere Ausführungsform des Überwachungssystems 100 mit dem Fluiddurchflussmessgerät 1 und der Leiteinrichtung 50 dargestellt. Im Folgenden werden die Unterschiede zu dem Ausführungsbeispiel aus Figur 1 beschrieben. Das Diagnosesystem 7 ist beabstandet zu dem Gehäuse des Fluiddurchflussmessgeräts 1 angeordnet, in dem die Messeinrichtung 8 angeordnet ist. Beispielsweise kann das Diagnosesystem 7 am Ort der Leiteinrichtung 50 angeordnet sein. In diesem Ausführungsbeispiel findet eine Datenkommunikation von der Messeinrichtung 8 zu dem Diagnosesystem 7 statt. Weiterhin findet eine Datenkommunikation von dem Diagnosesystem 7 zu der Leiteinrichtung 50 statt. Vorzugsweise handelt sich hierbei um eine digitale Schnittstelle. Weiterhin umfasst das Diagnosesystem 7 ein KI-Modul 14. Das KI-Modul 14 ist dazu ausgebildet, um in Abhängigkeit der zumindest einen ersten und zweiten Messgröße 5a, 5b den ersten Schwellwert 4a für die zumindest eine erste Diagnosekenngröße 6 zu ermitteln.

Figur 3 zeigt ein Ausführungsbeispiel, welches erläutert, wie ein erster und zweiter Schwellwert 4a, 4b für die erste Diagnosekenngröße 6 in Abhängigkeit einer ersten Messgröße 5a und einer zweiten Messgröße 5b ermittelt wird. Die erste Messgröße 5a ist in diesem Fall die Fluiddurchflussgeschwindigkeit. Die zweite Messgröße 5b ist die Schallgeschwindigkeit im Fluid 3. Für unterschiedliche Paarungen von erster Messgröße 5a und zweiter Messgröße 5b wird die erste Diagnosekenngröße 6 ermittelt. Weiterhin wird anhand der ersten Messgröße 5a und der zweiten Messgröße 5b der erste Schwellwert 4a (durchgezogene Linie) und der zweite Schwellwert 4b (gestrichelte Linie) ermittelt. Wird der erste bzw. zweite Schwellwert 4a, 4b durch die erste Diagnosekenngröße 6 erreicht oder unterschritten (zu kleiner Signal-zu-Rauschabstand), so wird die jeweilige erste und/oder zweite Meldung erzeugt und an die übergeordnete Leiteinrichtung 50 übertragen. Diese Information bezüglich des ersten und zweiten Schwellwerts 4a, 4b kann in einer Look-Up-Tabelle hinterlegt sein. So kann die Look-Up-Tabelle eine zweidimensionale oder mehrdimensionale Tabelle für die erste Messgröße 5a und die zweite Messgröße 5b umfassen. Für jede Spalte, die zu einem Wert für die erste Messgröße 5a und die zweite Messgröße 5b korrespondiert ist ein entsprechender erster Schwellwert 4a und ein entsprechender zweiter Schwellwert (optional) 4b in der Look-Up-Tabelle hinterlegt. Überschreitet die erzeugte erste Diagnosekenngröße 7 den entsprechenden Schwellwert 4a, 4b, so wird die entsprechende erste bzw. zweite Meldung erzeugt und an die übergeordnete Leiteinrichtung 50 ausgegeben.

Dargestellt ist, dass der erste Schwellwert 4a und der zweite Schwellwert 4b in Abhängigkeit von verschiedenen ersten und zweiten Messgrößen 5a, 5b unterschiedlich gewählt sind. Auch ein Abstand zwischen dem ersten Schwellwert 4a und dem zweiten Schwellwert 4b unterscheidet sich für verschiedene erste und zweite Messgrößen 5a, 5b.

Für den Fall, dass das Diagnosesystem 7 noch eine zweite Diagnosekenngröße erzeugt, kann ebenfalls eine entsprechende Look-Up-Tabelle verwendet werden, wobei die Arten für die erste Messgröße 5a und die zweite Messgröße 5b unterschiedlich gewählt sind.

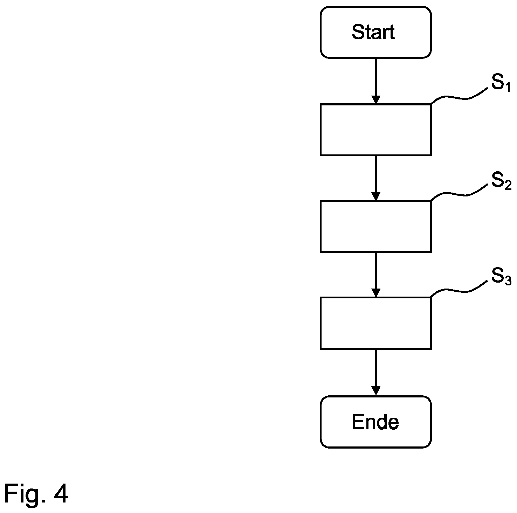

Figur 4 zeigt ein Verfahren zum Betrieb des Fluiddurchflussmessgeräts 1. In einem ersten Verfahrensschritt S₁ wird die erste Messgröße 5a und die zumindest eine zweite Messgröße 5b für das Fluid 3 erzeugt. Weiterhin wird eine erste Diagnosekenngröße 6 erzeugt. In einem zweiten Verfahrensschritt S₂ wird ein erster Schwellwert 4a für die zumindest eine erste Diagnosekenngröße 6 anhand der ersten Messgröße 5a und anhand der zumindest einen zweiten Messgröße 5b ermittelt. In einem dritten Verfahrensschritt S₃ wird die erste Meldung an die übergeordnete Leiteinrichtung 50 ausgegeben, wenn der erste Schwellwert 4a durch die, insbesondere fortlaufend neu erzeugte, erste Diagnosekenngröße 6 erreicht wird.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

### Bezugszeichenliste

| | |
|---|---|
| Fluiddurchflussmessgerät | 1 |
| Röhre | 2 |
| Fluid | 3 |
| Erster Schwellwert | 4a |
| Zweiter Schwellwert | 4b |
| Erste Messgröße | 5a |
| Zweite Messgröße | 5b |
| Erste Diagnosekenngröße | 6 |
| Diagnosesystem | 7 |
| Messeinrichtung | 8 |
| Erste Sende- und Empfangseinheit | 9a |
| Zweite Sende- und Empfangseinheit | 9b |
| Erstes Ultraschallsignal | 10a |
| Zweites Ultraschallsignal | 10b |
| Drucksensor | 11 |
| Temperatursensor | 12 |
| Speichereinheit | 13 |
| KI-Modul | 14 |
| Leiteinrichtung | 50 |
| Ausgabeeinheit | 51 |
| Überwachungssystem | 100 |
| Verfahrensschritte | S₁, S₂, S₃ |

## Patentansprüche

1. Fluiddurchflussmessgerät (1), um den Durchfluss eines Fluids (3), insbesondere in Form von Gas, in einer Röhre (2) zu bestimmen, wobei das Fluiddurchflussmessgerät (1) dazu ausgebildet ist, um eine erste Messgröße (5a) und zumindest eine zweite Messgröße (5b) für das Fluid (3) und zumindest eine erste Diagnosekenngröße (6) zu erzeugen, wobei das Fluiddurchflussmessgerät (1) ein Diagnosesystem (7) umfasst, welches dazu ausgebildet ist, um sowohl anhand der ersten Messgröße (5a) als auch anhand der zumindest einen zweiten Messgröße (5b) einen ersten Schwellwert (4a) für die zumindest eine erste Diagnosekenngröße (6) zu ermitteln und ab dessen Erreichen eine erste Meldung, insbesondere an eine übergeordnete Leiteinrichtung (50), auszugeben.

2. Fluiddurchflussmessgerät (1) nach Anspruch 1,
wobei das Diagnosesystem (7) dazu ausgebildet ist, um insbesondere, sowohl anhand der ersten Messgröße (5a) als auch anhand der zumindest einen zweiten Messgröße (5b), einen zweiten Schwellwert (4b) für die zumindest eine erste Diagnosekenngröße (6) zu ermitteln und um ab dessen Erreichen eine zweite Meldung an die übergeordnete Leiteinrichtung (50) auszugeben, wobei die erste Meldung eine Warnmeldung oder eine Störungsmeldung ist und wobei die zweite Meldung eine Störungsmeldung oder eine Warnmeldung ist.

3. Fluiddurchflussmessgerät (1) nach Anspruch 1 oder 2,
wobei die zumindest eine erste Messgröße (5a) ein physikalischer Messwert des Fluids (3) oder eine aus einem physikalischen Messwert abgeleitete Größe ist; und/oder
wobei die zumindest eine zweite Messgröße (5b) ein physikalischer Messwert des Fluids (3) oder eine aus einem physikalischen Messwert abgeleitete Größe ist.

4. Fluiddurchflussmessgerät (1) nach einem der vorstehenden Ansprüche, wobei die erste Messgröße (5a) ausgewählt ist aus folgenden Fluideigenschaften:
a) Fluiddurchflussgeschwindigkeit;
b) Schallgeschwindigkeit in dem Fluid (3); oder
c) auf Druck und Temperatur normierte Schallgeschwindigkeit in dem Fluid (3);
und/oder
wobei die zweite Messgröße (5b) ausgewählt ist aus folgenden Fluideigenschaften:
a) Fluiddurchflussgeschwindigkeit;
b) Schallgeschwindigkeit in dem Fluid (3); oder
c) auf Druck und Temperatur normierte Schallgeschwindigkeit in dem Fluid (3);
wobei die erste und die zweite Messgröße (5a, 5b) unterschiedliche Fluideigenschaften umfassen.

5. Fluiddurchflussmessgerät (1) nach einem der vorstehenden Ansprüche, wobei die zumindest eine erste Diagnosekenngröße (6) eine Messfähigkeit des Fluiddurchflussmessgeräts (1) beschreibt oder auf eine Messfähigkeit Rückschlüsse zulässt.

6. Fluiddurchflussmessgerät (1) nach einem der vorstehenden Ansprüche, wobei die zumindest eine erste Diagnosekenngröße (6) ein Signal-zu-Rauschabstand oder eine Turbulenz des Fluids (3) ist.

7. Fluiddurchflussmessgerät (1) nach Anspruch 6,
wobei das Fluiddurchflussmessgerät (1) eine Messeinrichtung (8) umfasst, die dazu ausgebildet ist, um die erste und die zumindest eine zweite Messgröße (5a, 5b) zu erfassen, wobei sich der Signal-zu-Rauschabstand auf die erste und/oder zweite Messgröße (5a, 5b) bezieht.

8. Fluiddurchflussmessgerät (1) nach einem der vorstehenden Ansprüche, wobei das Diagnosesystem (7) eine Speichereinheit (13) umfasst, in welcher eine Look-Up-Tabelle hinterlegt ist, wobei das Diagnosesystem (7) dazu ausgebildet ist, um in Abhängigkeit der zumindest einen ersten und zweiten Messgröße (5a, 5b) den ersten Schwellwert (4a) für die zumindest eine erste Diagnosekenngröße (6) aus der Look-Up-Tabelle auszulesen.

9. Fluiddurchflussmessgerät (1) nach einem der vorstehenden Ansprüche, wobei das Diagnosesystem (7) ein KI-Modul (14) umfasst, wobei das KI-Modul (14) dazu ausgebildet ist, um in Abhängigkeit der zumindest einen ersten und zweiten Messgröße (5a, 5b) den ersten Schwellwert (4a) für die zumindest eine erste Diagnosekenngröße (6) zu ermitteln.

10. Fluiddurchflussmessgerät (1) nach einem der vorstehenden Ansprüche, wobei das Fluiddurchflussmessgerät (1) dazu ausgebildet ist, um zumindest eine zweite Diagnosekenngröße, die von der ersten Diagnosegröße (6) verschiedenen ist, zu erzeugen, wobei das Diagnosesystem (7) dazu ausgebildet ist, um sowohl anhand der ersten Messgröße (5a) als auch anhand der zumindest einen zweiten Messgröße (5b) einen ersten Schwellwert für die zumindest eine zweite Diagnosekenngröße zu ermitteln, um ab dessen Erreichen eine erste Meldung an die übergeordnete Leiteinrichtung (50) auszugeben.

11. Fluiddurchflussmessgerät (1) nach einem der vorstehenden Ansprüche, wobei das Fluiddurchflussmessgerät (1) eine Messeinrichtung (8) mit einer ersten und zweiten Sende- und Empfangseinheit (9a, 9b) umfasst, wobei die erste Sende- und Empfangseinheit (9a) dazu ausgebildet ist, um ein erstes Ultraschallsignal (10a) zu erzeugen und auszusenden und um ein zweites Ultraschallsignal (10b) zu empfangen und wobei die zweite Sende- und Empfangseinheit (9b) dazu ausgebildet ist, um das zweite Ultraschallsignal (10b) zu erzeugen und auszusenden und um das erste Ultraschallsignal (10a) zu empfangen, wobei die erste und die zweite Sende- und Empfangseinheit (9a, 9b) sowohl in Umfangsrichtung als auch in Axialrichtung versetzt an der Röhre (2) anbringbar sind und wobei die Messeinrichtung (8) dazu ausgebildet ist, um die erste und die zweite Messgröße (5a, 5b) zu ermitteln.

12. Fluiddurchflussmessgerät (1) nach Anspruch 11,
wobei die erste Sende- und Empfangseinheit (9a) dazu ausgebildet ist, um das erstes Ultraschallsignal (10a) durch das Innere der Röhre (2) zur zweiten Sende- und Empfangseinheit (9b) zu senden und wobei die zweite Sende- und Empfangseinheit (9b) dazu ausgebildet, um das erste Ultraschallsignal (10a) zu empfangen und wobei die zweite Sende- und Empfangseinheit (9b) dazu ausgebildet ist, um das zweite Ultraschallsignal (10b) durch das Innere der Röhre (2) zur ersten Sende- und Empfangseinheit (9a) zu senden und wobei die erste Sende- und Empfangseinheit (9a) dazu ausgebildet, um das zweite Ultraschallsignal (10b) zu empfangen.

13. Fluiddurchflussmessgerät (1) nach Anspruch 11 oder 12,
wobei die Messeinrichtung (8) zumindest einen Drucksensor (11) umfasst, der dazu ausgebildet ist, um den Druck des Fluids (3) innerhalb der Röhre (2) zu messen und/oder wobei die Messeinrichtung (8) zumindest einen Temperatursensor (12) umfasst, der dazu ausgebildet ist, um die Temperatur des Fluids (3) innerhalb der Röhre (2) zu messen.

14. Überwachungssystem (100) mit zumindest einem Fluiddurchflussmessgerät (1) gemäß einem der vorherigen Ansprüche und einer Leiteinrichtung (50), wobei das zumindest eine Fluiddurchflussmessgerät (1) an zumindest einer Röhre (2) anbringbar ist und wobei das zumindest eine Fluiddurchflussmessgerät (1) dazu ausgebildet ist, um zu bestimmen wieviel Fluid (3) in einer bestimmten Zeit durch die Röhre (2) strömt und wobei das das zumindest eine Fluiddurchflussmessgerät (1) dazu ausgebildet ist, um die erste Meldung an die Leiteinrichtung (50) zu übertragen und wobei die Leiteinrichtung (50) dazu ausgebildet ist, um die erste Meldung oder eine daraus abgeleitete Meldung visuell und/oder akustisch darzustellen.

15. Verfahren zum Betrieb eines Fluiddurchflussmessgerät (1), welches dazu ausgebildet ist um den Durchfluss eines Fluids (3), insbesondere in Form von Gas, in einer Röhre (2) zu bestimmen, wobei das Verfahren die folgenden Verfahrensschritte umfasst:
- Erzeugen (S₁) einer ersten Messgröße (5a) und zumindest einer zweiten Messgröße (5b) für das Fluid (3) und Erzeugen zumindest einer ersten Diagnosekenngröße (6);
- Ermitteln (S₂) eines ersten Schwellwerts (4a) für die zumindest eine erste Diagnosekenngröße (6) anhand der ersten Messgröße (5a) und anhand der zumindest einen zweiten Messgröße (5b);
- Ausgeben (S₃) einer ersten Meldung an eine übergeordnete Leiteinrichtung (50) wenn der erste Schwellwert (4a) erreicht ist.
